# EUROPEAN PATENT APPLICATION

(11) **EP 1 271 947 A2**
(43) Date of publication of application: **02.01.2003**
(21) Application number: 02013306.2
(22) Date of filing: 18.06.2002
(51) Int. Cl.: H04N 5/92

(54) **Simultaneous picture recording and reproducing method and simultaneous recording and reproducing apparatus**

(30) Priority: 21.06.2001 JP 2001187615
(71) Applicant: Nihon Computer Co., Ltd., Hamamatsu-shi, Shizuoka-ken (JP)
(72) Inventor: Masahiro Nagata c/o Nihon Computer Co., Ltd., Shizuoka-ken (JP); Suguru Yoshioka, Shizuoka-ken (JP)
(74) Representative: Cohausz & Florack

(57) **Abstract**

An object of the present invention is to provide a simultaneous picture recording and reproducing method and apparatus capable of readily storing a plurality of simultaneous independent picture information and efficiently storing or reproducing information while continuously storing a new piece of independent picture information.

A simultaneous picture recording and reproducing method is characterized in: that a plurality of independent picture information (P1,P2), which are digitized and independent of each other, is stored in at least one of temporary storage means (12); that the independent picture information stored in the temporary storage means (12) and independent picture information inputted from outside are synthesized (10) in synchronization with each other to generate at least one of synthesized picture information; that, thereafter, the synthesized picture information is stored directly in a main storage means (15), or the synthesized picture information is subjected to a writing process (13) such as a compressing process and is stored in the main storage means (15), and also the synthesized picture information is read directly from the main storage means (15), or the synthesized picture information is subjected to a reading process (21) such as an extending process and is read from the main storage means (15); and that, thereafter, at least one of the independent picture information is extracted (22) and processed from the read piece of synthesized picture information and is reproduced (30).

## Description

### BACKGROUND OF THE INVENTION

The present invention relates to a simultaneous picture recording and reproducing method and apparatus for recording a plurality of simultaneously inputted picture information and for individually reproducing the picture information.

Most picture information to shoot by video cameras consists of each of portions independently and concurrently progressing with each other in real time. Therefore, in order to record these picture information, it is needed the same number of picture recording devices as that of picture information for recording. Actually, the recording device is generally a picture recording and reproducing device represented by a video deck. The picture recording and reproducing device records picture information on a recording medium such as a video tape or the like in real time and also reproduces the picture information recorded on the recording medium.

However, when a prior art picture recording and reproducing device is used for recording and reproducing information, a lot of picture recording and reproducing devices are needed to record a lot of picture information, while, when the number of picture information for recording have decreased, some of the picture recording and reproducing devices become unnecessary, thus preventing the devices from being efficiently utilized.

In addition, since it is impossible to record picture information while reproducing recorded picture information, it is needed to pause a recording operation of picture information generated in real time, when picture information from a monitoring camera is recorded, some of important information happen to be lost.

Meanwhile, a prior art picture recording and reproducing device simply records inputted picture information in real time and requires an enormously large capacity of storage medium for entire recording. Also, it is difficult to efficiently utilize recoding media by diverting them to another recording, for example.

### SUMMARY OF THE INVENTION

In view of the foregoing circumstances, an object of the present invention is to provide a simultaneous picture recording and reproducing method and apparatus capable of readily storing a plurality of simultaneous independent picture information and efficiently storing or reproducing information while continuously storing a new piece of independent picture information.

In order to realize the above-mentioned object, a simultaneous picture recording and reproducing method written in claim 1 is characterized in: that a plurality of independent picture information, which are digitized and independent of each other, is stored in at least one of temporary storage means; that the independent picture information stored in the temporary storage means and independent picture information inputted from outside are synthesized in synchronization with each other to generate at least one of synthesized picture information; that, thereafter, the synthesized picture information is stored directly in a main storage means, or the synthesized picture information is subjected to a writing process such as a compressing process and is stored in the main storage means, and also the synthesized picture information is read directly from the main storage means, or the synthesized picture information is subjected to a reading process such as an extending process and is read from the main storage means; and that, thereafter, at least one of the independent picture information is extracted and processed from the read piece of synthesized picture information and is reproduced.

A simultaneous picture recording and reproducing method written in claim 2 is characterized in that: at least one of the independent picture information is extracted and reproduced from the synthesized picture information stored in the main storage means; that the reproduced independent picture information and at least one of a new piece of the independent picture information are synthesized with each other to generate a new piece of synthesized picture information; and that, thereafter, the new piece of synthesized picture information is overwritten into the main storage means.

A simultaneous picture recording and reproducing method written in claim 3 is characterized in that: a parameter for efficiently synthesizing and storing information is extracted from the independent picture information; and that the independent picture information stored in the temporary storage means is subjected to an image-size changing process in accordance with the parameter; and that, thereafter, the plurality of processed independent picture information are arranged in a row in every picture and is synthesized.

A simultaneous picture recording and reproducing method written in claim 4 is characterized in that: a re-synthesizing parameter for efficiently synthesizing and storing information is extracted from the synthesized picture information; that the independent picture information is reproduced from the synthesized picture information; and that, thereafter, the synthesized picture information is regenerated in accordance with the re-synthesizing parameter.

A simultaneous picture recording and reproducing method written in claim 5 is characterized by performing a re-synthesizing operation by including the new piece of independent picture information.

A simultaneous picture recording and reproducing method written in claim 6 is characterized by synthesizing the independent picture information with relational information obtained by picturizing information related to the independent picture information in synchronization with each other to generate the synthesized picture information.

A simultaneous picture recording and reproducing apparatus written in claim 7 is characterized by comprising: at least one of temporary storage means for storing a plurality of independent picture information which are digitized and independent of each other; a synthesizing means for synthesizing the plurality of independent picture information stored in the temporary storage means in synchronization with each other to generate at least one of synthesized picture information; a main storage means for directly storing the synthesized picture information or for storing the synthesized picture information after subjecting the synthesized picture information to a writing process such as a compressing process by a write processing means; and a reproducing means for reproducing at least one of the independent picture information upon extracting and processing the independent picture information from the synthesized picture information, which is read directly from the main storage means or is subjected to a read processing such as an extending process and is read from the main storage means.

A simultaneous picture recording and reproducing apparatus written in claim 8 is characterized in: that the reproducing means extracts and reproduces at least one of the independent picture information from the synthesized picture information stored in the main storage means; and that the synthesizing means synthesizes the reproduced independent picture information with at least one of the new piece of independent picture information to generate a new piece of synthesized picture information; and that, thereafter, the new piece of synthesized picture information is overwritten into the main storage means.

A simultaneous picture recording and reproducing apparatus written in claim 9 is characterized by comprising: a parameter extracting means for extracting parameters for efficiently synthesizing and storing information from the independent picture information; and a processing means for performing an image-size changing process in accordance with the parameters upon the independent picture information stored in the temporary storage means so that the synthesizing means synthesizes the plurality of processed independent picture information by arranging in a row in every picture.

A simultaneous picture recording and reproducing apparatus described in claim 10 is characterized by comprising a re-synthesizing parameter extracting means for extracting re-synthesizing parameters for efficiently synthesizing and storing information from the synthesized picture information so that the reproducing means reproduces the independent picture information from the synthesized picture information, and then the synthesizing means regenerates the synthesized picture information in accordance with the re-synthesizing parameters.

A simultaneous picture recording and reproducing apparatus written in claim 11 is characterized in that the synthesizing means re-synthesizes information including the new piece of independent picture information.

A simultaneous picture recording and reproducing apparatus written in claim 12 is characterized in that the synthesizing means synthesizes the independent picture information with relational information obtained by picturizing information related to the independent picture information in synchronization with each other to generate the synthesized picture information.

### BRIEF DESCRIPTION OF THE DRAWINGS

Fig. 1 is a structural diagram illustrating a simultaneous picture recording and reproducing apparatus according to a carrying-out mode 1 of the present invention.
Fig. 2 is an explaining diagram illustrating another embodiment according to a carrying-out mode 1 of the present invention.
Fig. 3 is a structural diagram illustrating a simultaneous picture recording and reproducing apparatus according to a carrying-out mode 2 of the present invention.

### DESCRIPTION OF PREFERRED EMBODIMENTS

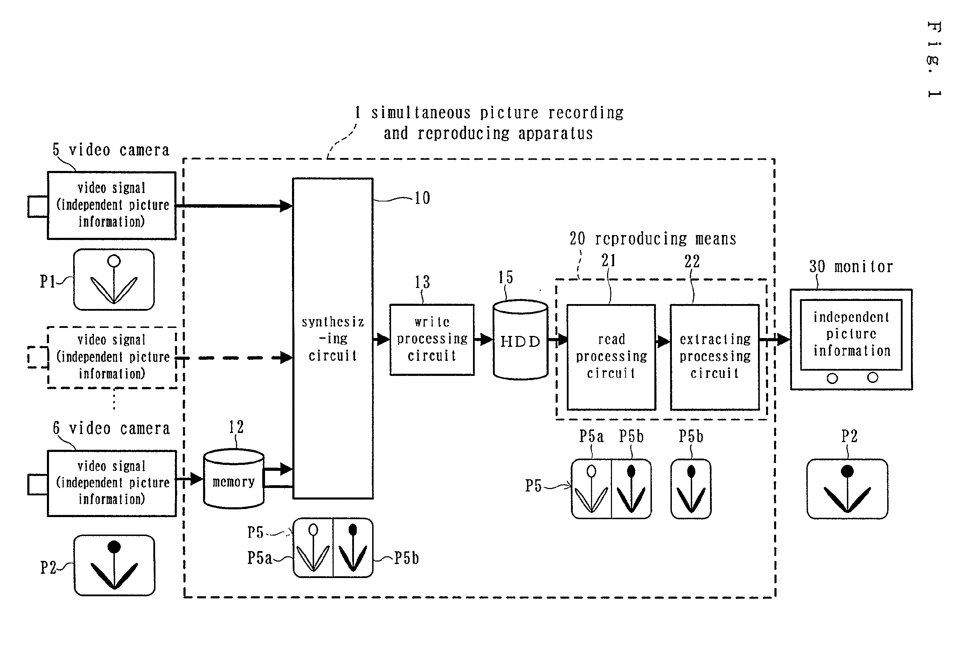

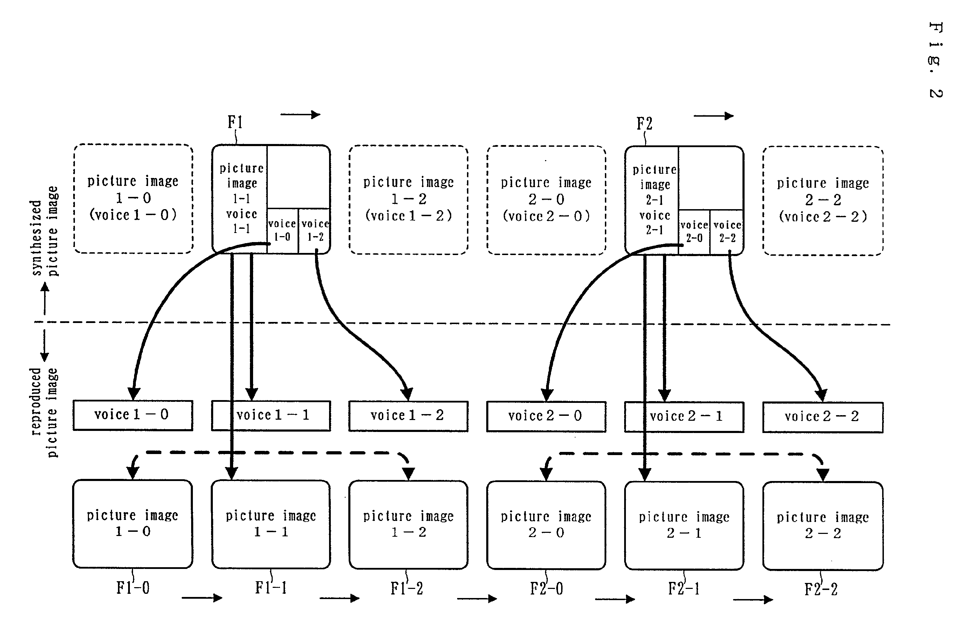

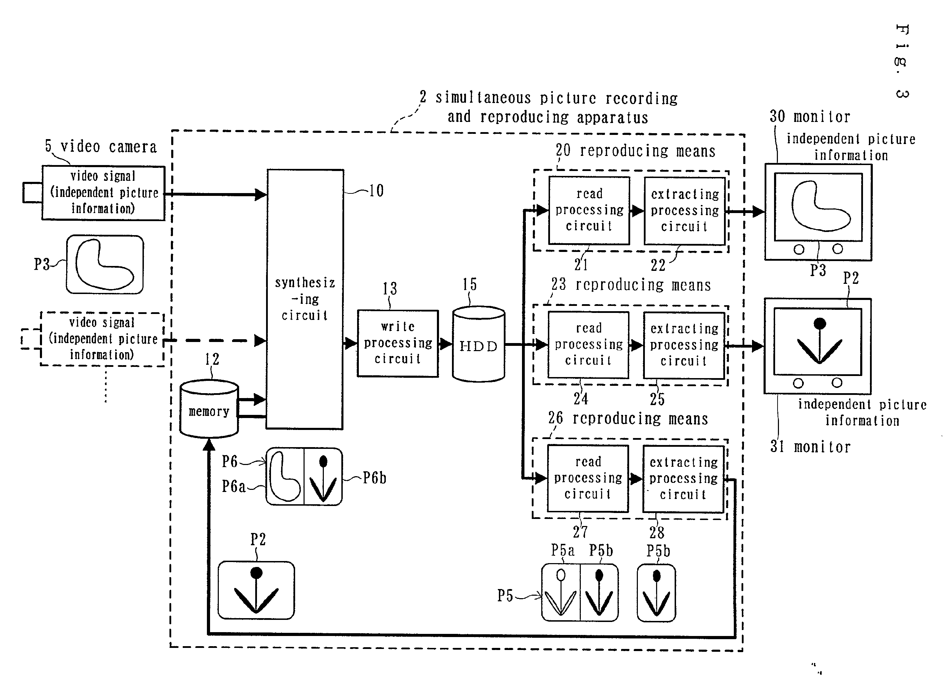

Hereinafter, modes of the present invention will be explained in detail with reference to drawings. Figs. 1 and 2 are diagrams for illustrating a first carrying-out mode, and Fig. 3 is a diagram for illustrating a second carrying-out mode.

### (Carrying-out Mode 1)

Fig. 1 is a structural diagram illustrating a simultaneous picture recording and reproducing apparatus according to a carrying-out mode 1 of the present invention. In Fig. 1, the simultaneous picture recording and reproducing apparatus can simultaneously record a plurality of independent picture information, and can independently reproduce each of the plurality of independent picture information, respectively. That is, the simultaneous picture recording and reproducing apparatus 1 can record a plurality of phenomena (pictures) simultaneously occurring (inputted) on a time basis and independently take out the recorded phenomena simultaneously occurring on a time basis as non-simultaneous phenomena (pictures) on a time basis.

In concrete terms, independent picture information is a digitized video signal as shown in Fig. 1 outputted from video camera 5 or 6, for example. Note that, the word independent of independent picture information means that the video signal from the video camera 5 and the video signal from the video camera 6 are individually asynchronous with each other and are not necessarily signals having shot simultaneously the same phenomenon. That is, only the video signals from the video cameras 5 and 6 are shown in Fig. 1 as examples of independent picture information, however, independent picture information is not limited thereto. For example, the picture information can be a video signal reproduced from videotape which is, however, not limited by its generating device whatever the video signal is. Also, since the independent picture information is a video signal, its storing operation by a hard disk, which will be stated later, means a picture recording, thus naming a simultaneous picture recording and reproducing apparatus.

The simultaneous picture recording and reproducing apparatus is comprised of a synthesizing circuit 10, a memory 12, a write processing circuit 13, a hard disk drive 15, a reproducing means 20 and the like. The synthesizing circuit 10 is provided with a parameter extracting means for extracting parameters for efficiently synthesizing and storing independent picture information, a processing means for performing an image-size changing process upon independent picture information, and a synthesizing means for synthesizing a plurality of independent picture information to generate synthesized picture information. Note that the synthesizing circuit 10 is provided with an input unit for directly inputting independent picture information from the video camera 5 outside of the simultaneous picture recording and reproducing apparatus 1, and an input unit for inputting independent picture information from the memory 12, which will be stated later. Moreover, there is no limitation in the number of input units.

The memory 12 is a temporary storage means, i.e., a device capable of reading and writing with high speed such as an RAM (Random Access Memory), which can store independent picture information, i.e., a video signal inputted from the video camera 6 as a picture image.

The write processing circuit 13 is used for performing a compressing process or the like upon the synthesized picture information generated at the synthesizing circuit 10 to convert the synthesized picture information into data capable of being stored in the hard disk drive 15 which will be stated later.

The hard disk drive 15 (hereinafter, HDD) is a random access main storage means, and is a nonvolatile storage medium capable of carrying out repetitive read and write operations. Since the HDD 15 is a medium for storing synthesized picture information obtained by synthesizing independent picture information which is a video signal. That is, the HDD 15 is a picture recording medium. Note that a storage medium applicable as a main storage means is not limited to the HDD 15, for example, a CD-R (Compact Disc-Recordable), a CD-RW (Compact Disc-ReWritable), an MD (Mini Disc), a DVD-RAM (Digital Versatile Disc-RAM), an MO (Magneto Optical Disc), a semiconductor memory, a silicon disk or the like can be used.

The reproducing means 20 extracts, processes and reproduces arbitrary independent picture information from a synthesized picture signal stored in the HDD 15 to indicate the independent picture information on a monitor 30 outside of the simultaneous picture recording and reproducing apparatus 1. The reproducing means 20 is provided with a read processing means 21 for performing an extending process or the like upon the synthesized picture information compressed at the write processing circuit 13, and an extracting processing circuit 22 for extracting a desired independent picture information from the synthesized picture information.

Next, an operation of the simultaneous picture recording and reproducing apparatus 1 according to the carrying-out mode 1 will be explained. First, a video signal from the video camera 5 is inputted into the synthesizing circuit 10 as independent picture information (pale flower image P1 (indicated without blacking-out in Fig. 1)). Meanwhile, a video signal from the video camera 6 is sequentially stored as independent picture information (strong flower image P2 (indicated with blacking-out in Fig. 1)). The synthesizing means in the synthesizing circuit 10 synchronizes two pieces of independent picture information P1 and P2 with each other on a frame-by-frame basis to put each picture of each synchronized frame in each of independent picture information P1 and P2 together, thus generating one picture constituting one frame. And, two pieces of independent picture information are put together to form one stream of synthesized picture information P5.

Before explanation of synthesizing information, a method for synchronizing two pieces of independent picture information P1 and P2 will be explained. First, the independent picture information P1 from the video camera 5 is assumed to be master information for synchronization. After that, a frame synchronizing timing is extracted from the independent picture information from the video camera 5 to read the independent picture information P2 from the video camera 6 stored in the memory 12 in accordance with the frame synchronizing timing. Thus, two pieces of independent picture information P1 and P2 are inputted into the synthesizing circuit 10 in synchronization with each other.

Moreover, when two pieces of independent picture information P1 and P2 are subjected to a synthesizing operation, since it is impossible to put the two pieces of independent picture information P1 and P2 together with their own image sizes, the processing means performs an image-size changing operation. However, it is not that a conversion of image sizes of the two pieces of independent picture information simply into halves is an appropriate solution. For example, in the case that the video camera 5 is a security camera, since it is needed to preserve information with a highest quality of image therein, the image-size changing operation which would remarkably degrade image quality cannot be employed so that a storage state of the best possible quality of image is required. Owing to this, parameters for efficiently synthesizing and storing information in a preserved image quality state are extracted from independent picture information by a parameter extracting means prior to the image-size changing operation. After that, the image-size changing operation is carried out in accordance with the extracted parameters.

In Fig. 1, since two pieces of independent picture information P1 and P2 are obtained by shooting an substantially equivalent object, the image sizes of the two pieces of picture information are converted into halves in the horizontal direction to assume the converted information to be independent picture information P5a and independent picture information P5b, and those picture information are synthesized to generate synthesized picture information P5. Although an image-size conversion into a half in the horizontal direction is carried out in Fig. 1, the image-size conversion is not limited thereto, but an appropriate image-size conversion determined by extracted parameters can be employed. For example, independent picture information P1 is assumed to be a half in size in the horizontal direction and independent picture information P2 is assumed to be a half in size in the horizontal and vertical directions, which causes total size of the independent picture information P2 to be one-fourth. Any combination of sizes can be employed.

Synthesized picture information P5 generated by the synthesizing circuit 10 is subjected to a compressing process or a picture interleaving process at the write processing circuit 13 so that the synthesized picture information P5 is converted into a most suitable data in size for the synthesized picture information P5. After that, the synthesized picture information P5 is written and stored in the HDD 15. Note that the synthesized picture information P5 may be written and stored in the HDD 15 without passing through the process of the write processing means 13. Owing to the above-described operations, the independent picture information P1 and P2 have been recorded into the simultaneous picture recording and reproducing apparatus 1.

Next, a method for reproducing an arbitrary independent picture information will be explained, which the independent picture information is included in the synthesized picture information P5 stored in the HDD 15. Note that, although a playback of independent picture information P2 will be explained, a playback of independent picture information P1 as well can be carried out by using the same procedure, and besides, it is also possible to individually reproduce both of the independent picture information P1 and P2 at the same time.

The synthesized picture information P5 read from the HDD 15 is subjected to an extending process at the read processing means 21 in the reproducing means 20. The extending process is a reverse process of the process carried out in the write processing means 13. After that, independent picture information P5b to reproduce is extracted from the synthesized picture information P5 by the extracting processing means 22 in the reproducing means 20 to convert into an image size reproducible on a monitor 30. Owing to this operation, the independent picture information P2 is restored and then displayed on the monitor 30.

In the simultaneous picture recording and reproducing apparatus 1 according to the carrying-out mode 1, the independent picture information P1 and P2 are synthesized with each other and are subjected to a synthesizing process so that the synthesized picture information P5 is generated, and then the synthesized picture information P5 is stored directly in the HDD 15, or the synthesized picture information P5 is subjected to a writing process such as a compressing process and is stored in the HDD 15, which allows a plurality of independent picture information P1 and P2 to be readily reserved at the same time. In addition, arbitrary independent picture information P1 and P2 can be reproduced from the synthesized picture information P5.

Moreover, even in the case where it is impossible to estimate information about a time period, quality, an inputting timing and the like of the independent picture information to be stored, since the independent picture information P2 is supplied to the synthesizing circuit 10 through the memory 12 which is a temporary storage means, it is possible to extract parameters of the information property from the independent picture information temporarily stored in the memory 12, thus performing an efficient storing function in cope with obscure independent picture information as well.

Moreover, the write processing operation such as a compressing treatment is performed after the synthesizing processing operation, which needs only one writing process, thus efficiently performing the compressing process, which would be time-consuming. Also, a compressing process needs a large capacity hardware resource (software resource), but in this apparatus, the provision of only one compressing processing means solves the problem, which allows the simultaneous picture recording and reproducing apparatus 1 to be smaller in size and lower in cost.

Moreover, since parameters for efficiently synthesizing and storing information are extracted from independent picture information P1 and P2, and an image-size changing process is performed upon the independent picture information P1 and P2 in accordance with the extracted parameters, more optimized items of synthesized picture information P5 can be obtained by adjusting image size, thus efficiently preserving the information.

Moreover, even in the case where a plurality of independent picture information P1 and P2 exist, the storing operation of synthesized picture information P5 allows the number of the HDD 15 which is a main storage means to be at least one, so that the simultaneous picture recording and reproducing apparatus 1 is smaller in size and lower in cost.

Note that, in the above-described explanation, independent picture information to be synthesized into synthesized picture information is limited to a video signal. However, the independent picture information is not limited thereto. Hereinafter, a case of synthesizing and storing of other information will be explained with reference to Fig. 2.

Although the independent picture information P1 and P2 shown in Fig. 1 are picture information in the form of a video signal, when other information such as character information and sound information are picturized and converted into independent picture information, the independent picture information P1 and P2 can be synthesized as synthesized picture information. Needless to say, it is possible to picturize and synthesize information having no relation to other independent picture information. However, in consideration of the need of the simultaneous picture recording and reproducing apparatus 1 to preserve more number of independent picture information with a higher quality, it is desired to synthesize and store a relational information as synthesized picture information, the relational information being the information that picturized information related to independent picture information. Typical information of the relational information is a sound, a character, an image having a time correlation ship or the like, which have relation to independent picture information of a subject.

Note that independent picture information generated by picturizing character information, sound information or the like is not picture information which has a direct object to reproduce information by the reproducing means 20 and to indicate the information on the monitor 30. That is, the picturization according to this specification means an operation for inserting the information of character, sound or the like into an area of synthesized picture information.

In the actual synthesizing circuit 10 or the actual write processing circuit 13, a picture interleaving treatment as its processing method is performed upon images after an image-size changing process or a compressing process is carried out. In such a situation, actual information included in the synthesized picture information are only ones above a straight dotted line in Fig. 2 (above the upward arrow of the synthesized information), i.e., only solid-lined pictures (pictures F1 and F2) that dotted-lined pictures (pictures 1-0, 1-2, 2-0 and 2-2) are interleaved from the actual pictures. Because such an interleaving operation is carried out on account of the fact that picture information for several seconds before or behind the pictures F1 and F2 are reproducible. However, it is difficult to completely reproduce interleaved pictures. Also, since there must have been a portion of a continuous sound in the interleaved period, it is difficult to complement the sound. Therefore, the interleaved sound or picture is picturized within a faithfully reproducible range as other independent picture information, and the other independent picture information is synthesized with basic independent picture information to generate synthesized picture information.

With reference to Fig. 2, a sound obtained as relational information by picturizing information related to independent picture information will be explained. When synthesized picture information is generated in the synthesizing circuit 10, independent picture information, i.e., the picture 1-1 (including the sound 1-1) which remains without being interleaved, independent picture information obtained by picturizing the sound 1-0 included in the picture 1-0 to be interleaved, and independent picture information obtained by picturizing the sound 1-2 included in the picture 1-2 to be interleaved are synthesized to generate synthesized picture information. Each image of the synthesized picture information corresponds to the picture F1 or the picture F2. That is, the picture 1-1 including the sound 1-1, the sound 1-0 and the sound 1-2 are synthesized to form a piece of image in the picture F1. Note that the picture shown by a picture *-* (sound *-*) designates a frame of image on a frame-by-frame basis.

In the reproducing means 20, the picture 1-1 and the picture 2-1 are extracted from the synthesized picture information to reproduce each of the interleaved pictures interleaved before and behind the extracted picture 1-1 and the picture 2-1, and operations are carried out to append sounds to the reproduced pictures, thus reproducing the consecutive pictures. In concrete terms, first, in accordance with the picture 1-1 stored in the picture F1, the picture F1-0 (picture 1-0) that is the previous frame of the picture 1-1 is reproduced. Next, the sound 1-0 synthesized in the picture F1 is extracted and appended to the picture F1-0 (picture 1-0), thus reproducing the sound 1-0. Next, the picture 1-1 (sound 1-1) is reproduced as the picture F1-1. Consecutively, in accordance with the picture 1-1 stored in the picture F1, the picture F1-2 (picture 1-2) that is the frame behind the picture 1-1 is reproduced. Next, the sound 1-2 synthesized in the picture F1 is extracted and appended to the picture F1-2 (picture 1-2), thus reproducing the sound 1-2. The picture F2 is also reproduced in a similar way, so that interleaved pictures are reproduced and consecutive independent picture information are reproduced.

As explained above, relational information obtained by picturizing information related to independent picture information is synthesized as synthesized picture information to append such as sound or character information related to the independent picture information to the synthesized picture information, thus readily generating the synthesized picture information having more added-information.

Also, since all kinds of information are synthesized as independent picture information, processes after the synthesizing process can be in common and stored in one form, thus allowing the simultaneous picture recording and reproducing apparatus 1 to be smaller in size and also lower in cost.

Even if some information is lacked when independent picture information is subjected to processes such as compressing process, information that should not be lacked is synthesized as the information relating to the independent picture information, so that it is possible to improve the reproducibility of independent picture information.

Moreover, parameters for image-size conversion or compression are picturized and stored as independent picture information, so that it is possible to reproduce independent picture information in a high quality of image in accordance with the parameters. Also, character information inputted from a computer is picturized and synthesized as independent picture information, so that it is possible to generate independent picture information having more added value as well.

### (Carrying-out Mode 2)

Fig. 3 is a structural diagram illustrating a simultaneous picture recording and reproducing apparatus according to a carrying-out mode 2 of the present invention. In Fig. 3, a simultaneous picture recording and reproducing apparatus 2 can record a plurality of phenomena (pictures) simultaneously occurring (inputted) on a time basis and independently take out the recorded phenomena simultaneously occurring on a time basis as non-simultaneous phenomena (pictures) on a time basis, in the same way as in the simultaneous picture recording and reproducing apparatus 1.

In the simultaneous picture recording and reproducing apparatus 2, it is naturally needed to supplement and preserve a new piece of independent picture information. However, since the preserving capacity of the HDD 15 is finite, it is difficult to store a new piece of synthesized picture information into a new area different from that of synthesized picture information stored in advance every time a new piece of independent picture information is supplemented and preserved. Therefore, in the simultaneous picture recording and reproducing apparatus 2, a new piece of synthesized picture information is not generated, but a new piece of independent picture information is synthesized into the existing independent picture information, thus performing an efficient preservation.

In Fig. 3, constituents denoted by the same reference numerals as those in the carrying-out mode 1 operate in the same way as in the carrying-out mode 1, and their description is omitted. Moreover, a reproducing means 23 (a read processing circuit 24 and an extracting processing circuit 25) and a reproducing means 26 (a read processing circuit 27 and an extracting processing circuit 28) are the same as the reproducing means 20 (the read processing circuit 21 and the extracting processing circuit 22), so that their description is omitted. Note that the output of the extracting processing circuit 25 is supplied to a monitor 31 outside of the simultaneous picture recording and reproducing apparatus 2, and the output of the extracting processing circuit 28 is supplied to a memory 12. In addition, the following is described assuming that the synthesized picture information P5 stored by the carrying-out mode 1 is maintained in the HDD 15.

First, the synthesized picture information stored in the HDD 15 is read and extended by the read processing circuit 27. Then, picture information P5b is extracted from synthesized picture information P5 and expanded to reproduce independent picture information P2 by the extracting processing circuit 28.

Next, the reproduced independent picture information P2 is supplied to a synthesizing circuit 10 through the memory 12, and also, independent picture information P3, which is a video signal, shot by a video camera 5 is inputted into the synthesizing circuit 10. After that, the synthesizing circuit 10 synthesizes the independent picture information P3 and the independent picture information P2 stored in the memory 12 in synchronization with each other. In this situation, the independent picture information P2 had been subjected to a synthesizing process upon extracting parameters for efficiently synthesizing and storing at the previous preserving process, however, it is not certain whether or not the past parameters are effective in synthesizing with the independent picture information P3, so that re-synthesizing parameters for re-synthesizing are required to extract new. That is, the synthesizing circuit 10 has both of functions of extracting parameters and extracting re-synthesizing parameters.

A new piece of synthesized picture information P6 is provided with independent picture information P6a synthesized from the independent picture information P3 and with independent picture information P6b synthesized from the independent picture information P2, which are compressed by a write processing circuit 13 and stored in the HDD 15. In this operation, the newly synthesized picture information P6 is overwritten into the area of the HDD 15 where the synthesized picture information P5 is already reproduced. Thus, the HDD 15 is efficiently utilized to carry out an efficient preservation. Moreover, it is also possible to carry out a reducing process of stored picture capacity by changing a compression rate for preservation without interrupting a current recording operation. The independent picture information P3 of the preserved item of synthesized picture information P6 is reproduced by the reproducing means 20 and displayed on a monitor 30. Meanwhile, the independent picture information P2 of the preserved item of synthesized picture information P6 is reproduced by the reproducing means 23 and displayed on the monitor 31.

As explained above, the reproducing means 26 extracts and reproduces independent picture information P5b from synthesized picture information P5, and the synthesizing circuit 10 synthesizes the reproduced independent picture information P5b and a new piece of independent picture information P3 in synchronization with each other to generate a new piece of synthesized picture information P6, and then, the HDD 15 as the main storage means is overwritten to delete the past item of synthesized picture information P5 properly. Accordingly, it is possible to re-record necessary information only and to delete the past item of synthesized picture information including unnecessary independent picture information at the same time. Also, it is possible to continuously record necessary independent picture information by using a recording medium with finite capacity without interrupting a recording operation of independent picture information generating on a basis of real time.

Note that, in the description of the carrying-out mode 2, although the case where a new piece of independent picture information P3 is synthesized by the way of exchanging independent picture information P5a is described, the synthesizing of a new piece of independent picture information is not limited thereto. For example, a new piece of independent picture information can be synthesized and stored in the HDD 15 by preparing another system of a reproducing means and a memory and restoring both of the independent picture information P5a and P5b in the synthesizing circuit 10 to synthesize the synthesized picture information P3 with the independent picture information P5a and P5b.

Moreover, under the condition that independent picture information P3 is not inputted, re-synthesizing parameters for efficiently re-synthesizing and storing information may be extracted from the independent picture information P5a and P5b, and then, more efficient independent picture information may be generated and stored in the HDD 15 by using the re-synthesizing parameters. That is, it is possible to preserve the reproduced information having a high image quality by overwriting again in accordance with the re-synthesizing parameters after the information is once stored with a highest image quality. Incidentally, re-synthesizing parameter extraction can be carried out from synthesized picture information. In this case, the reproducing means 26 functions as a re-synthesizing parameter extracting means.

Note that, according to the simultaneous picture recording and reproducing apparatus 2 of the carrying-out mode 2, after independent picture information is reproduced from synthesized picture information, re-synthesizing operation is performed in accordance with re-synthesizing parameters by including a new piece of independent picture information, in addition to the effect of the simultaneous picture recording and reproducing apparatus 1 of the carrying-out mode 1. As a result, even in the case where a new piece of independent picture information is synthesized with a stored item of synthesized picture information, it is possible to obtain more efficient synthesized picture image for preservation.

Note that, although all the circuits in the carrying-out modes 1 and 2 are structured as specialized electric and electronic circuits, these circuits may be structured by operational devices such as a CPU or the like to carry out predetermined programs to realize all the circuits. That is, a computer can be used as the simultaneous picture recording and reproducing apparatus 1 or 2.

In addition, in the reproducing means 20, 23 and 26, the read processing circuit 21, 24 or 27 is provided and the extracting processing circuit 22, 25 or 28 is further connected in series, respectively. However, the structure of extracting processing circuit is not limited thereto. For example, a plurality of extracting processing circuits may be connected in parallel to one read processing circuit to individually perform extracting processes upon each of required independent picture information.

Hereinafter, effects of the present invention will be explained in detail.

According to the first invention, since a plurality of independent picture information is synthesized with each other and are subjected to a synthesizing process to generate synthesized picture information, and then the synthesized picture information is stored directly in a main storage means, or the synthesized picture information is subjected to a writing process such as a compressing process and is stored in the main storage means, it is possible to readily preserve a plurality of independent picture information at the same time. In addition, since a plurality of main storage means is not needed, a surplus storage medium cannot be happened, thus efficiently utilizing a storage means. Moreover, since a write processing operation such as a compressing process is performed after a synthesizing processing operation, only one write processing operation is needed, thus efficiently performing a compressing process.

According to the second invention, independent picture information is extracted and reproduced from synthesized picture information, and the reproduced independent picture information and a new piece of independent picture information are synthesized in synchronization with each other to generate a new piece of synthesized picture information, and after that, the new piece of synthesized picture information is overwritten into a main storage means. Therefore, it is possible to re-record necessary information only and to delete past items of synthesized picture information including unnecessary independent picture information at the same time. Also, it is possible to continuously and efficiently record necessary independent picture information by using a recording medium with finite capacity without interrupting a recording operation of independent picture information generating on a basis of real time.

According to the third invention, since parameters for efficiently synthesizing and storing information are extracted from independent picture information, and an image-size changing process is carried out upon the independent picture information in accordance with the extracted parameters, more optimized items of synthesized picture information can be obtained by adjusting image sizes, thus efficiently preserving the information.

According to the fourth invention, since re-synthesizing parameters for efficiently synthesizing and storing information are extracted from synthesized picture information to reproduce independent picture information from the synthesized picture information, and after that, synthesized picture information is regenerated in accordance with the extracted re-synthesizing parameters; it is possible to obtain more efficient synthesized picture image for preservation.

According to the fifth invention, re-synthesizing parameters for efficiently synthesizing and storing information are extracted from synthesized picture information to reproduce independent picture information from the synthesized picture information, and after that, a re-synthesizing operation is carried out in accordance with the extracted re-synthesizing parameters by including a new piece of independent picture information. Therefore, even in the case where a new piece of independent picture information is synthesized with a stored piece of synthesized picture information, it is possible to obtain more efficient synthesized picture image for preservation.

According to the sixth invention, independent picture information and relational information obtained by picturizing information related to the independent picture information are synthesized in synchronization with each other to generate synthesized picture information. Therefore, it is possible to readily generate the synthesized picture information having more added-information by appending such as sound or character information related to independent picture information.

According to the seventh invention, since a synthesizing means for synthesizing independent picture information in synchronization with each other to generate synthesized picture information is provided, and the synthesized picture information is stored directly in a main storage means, or the synthesized picture information is subjected to a writing process such as a compressing process by a write processing means and is stored in the main storage means, it is possible to readily store a plurality of independent picture information at the same time. Also, it is possible to reproduce arbitrary independent picture information from synthesized picture information.

Moreover, since a write processing operation such as a compressing process is carried out by the write processing means after the synthesizing operation, only one writing process is needed, thus efficiently performing the compressing process.

According to the eighth invention, a reproducing means extracts and reproduces independent picture information from synthesized picture information, and a synthesizing means synthesizes the reproduced independent picture information and a new piece of independent picture information in synchronization with each other to overwrite the synthesized picture information into a main storage means. Therefore, it is possible to re-record necessary information only and to delete past items of synthesized picture information including unnecessary independent picture information at the same time. Also, it is possible to continuously and efficiently record necessary independent picture information by using a recording medium with finite capacity without interrupting a recording operation of independent picture information generating on a basis of real time.

According to the ninth invention, since a parameter extracting means extracts parameters for efficiently synthesizing and storing information from independent picture information, and a processing means subjects the independent picture information to an image-size changing process in accordance with the extracted parameters, more optimized items of synthesized picture information can be obtained by adjusting image sizes, thus efficiently preserving the information.

According to the tenth invention, since a re-synthesizing parameter extracting means extracts re-synthesizing parameters for efficiently synthesizing and storing information from synthesized picture information to reproduce independent picture information from the synthesized picture information, and after that, synthesized picture information is regenerated in accordance with the extracted re-synthesizing parameters; it is possible to obtain more efficient synthesized picture image for preservation.

According to the eleventh invention, a re-synthesizing parameter extracting means extracts re-synthesizing parameters for efficiently synthesizing and storing information from synthesized picture information to reproduce independent picture information from the synthesized picture information, and after that, a re-synthesizing operation is carried out in accordance with the extracted re-synthesizing parameters by including a new piece of independent picture information. Therefore, even in the case where a new piece of independent picture information is synthesized with a stored item of synthesized picture information, it is possible to obtain more efficient synthesized picture image for preservation.

According to the twelfth invention, a synthesizing means synthesizes independent picture information and relational information obtained by picturizing information related to the independent picture information in synchronization with each other to generate synthesized picture information. Therefore, it is possible to readily generate the synthesized picture information having more added-information by appending such as sound or character information related to independent picture information.

## Claims

1. A simultaneous picture recording and reproducing method **characterized in: that** a plurality of independent picture information, which are digitized and independent of each other, is stored in at least one of temporary storage means; that said independent picture information stored in said temporary storage means and independent picture information inputted from outside are synthesized in synchronization with each other to generate at least one of synthesized picture information; that, thereafter, said synthesized picture information is stored directly in a main storage means, or said synthesized picture information is subjected to a writing process such as a compressing process and is stored in the main storage means, and also said synthesized picture information is read directly from said main storage means, or said synthesized picture information is subjected to a reading process such as an extending process and is read from said main storage means; and that, thereafter, at least one of said independent picture information is extracted and processed from said read item of synthesized picture information and is reproduced.

2. A simultaneous picture recording and reproducing method as set forth in claim 1, **characterized in that**: at least one of said independent picture information is extracted and reproduced from said synthesized picture information stored in said main storage means; that said reproduced independent picture information and at least one of a new piece of said independent picture information are synthesized with each other to generate a new piece of synthesized picture information; and that, thereafter, said new piece of synthesized picture information is overwritten into said main storage means.

3. A simultaneous picture recording and reproducing method as set forth in claim 1 or claim 2, **characterized in that**: a parameter for efficiently synthesizing and storing information is extracted from said independent picture information; and that said independent picture information stored in said temporary storage means is subjected to an image-size changing process in accordance with said parameter; and that, thereafter, said plurality of processed independent picture information are arranged in a row in every picture and is synthesized.

4. A simultaneous picture recording and reproducing method as set forth in one of claim 1 to claim 3, **characterized in that**: a re-synthesizing parameter for efficiently synthesizing and storing information is extracted from said synthesized picture information; that said independent picture information is reproduced from said synthesized picture information; and that, thereafter, said synthesized picture information is regenerated in accordance with said re-synthesizing parameter.

5. A simultaneous picture recording and reproducing method as set forth in claim 4, **characterized by** performing a re-synthesizing operation by including said new piece of independent picture information.

6. A simultaneous picture recording and reproducing method as set forth in claim 1 to claim 5, **characterized by** synthesizing said independent picture information with relational information obtained by picturizing information related to said independent picture information in synchronization with each other to generate said synthesized picture information.

7. A simultaneous picture recording and reproducing apparatus **characterized by** comprising: at least one of temporary storage means for storing a plurality of independent picture information which are digitized and independent of each other; a synthesizing means for synthesizing said plurality of independent picture information stored in said temporary storage means in synchronization with each other to generate at least one of synthesized picture information; a main storage means for directly storing said synthesized picture information or for storing said synthesized picture information after subjecting said synthesized picture information to a writing process such as a compressing process by a write processing means; and a reproducing means for reproducing at least one of said independent picture information upon extracting and processing said independent picture information from said synthesized picture information, which is read directly from said main storage means or is subjected to a read processing such as an extending process and is read from said main storage means.

8. A simultaneous picture recording and reproducing apparatus as set forth in claim 7, **characterized in: that** said reproducing means extracts and reproduces at least one of said independent picture information from said synthesized picture information stored in said main storage means; and that said synthesizing means synthesizes said reproduced independent picture information with at least one of said new piece of independent picture information to generate a new piece of synthesized picture information; and that, thereafter, said new piece of synthesized picture information is overwritten into said main storage means.

9. A simultaneous picture recording and reproducing apparatus as set forth in claim 7 or claim 8, **characterized by** comprising: a parameter extracting means for extracting parameters for efficiently synthesizing and storing information from said independent picture information; and a processing means for performing an image-size changing process in accordance with said parameters upon said independent picture information stored in said temporary storage means so that said synthesizing means synthesizes said plurality of processed independent picture information by arranging in a row in every picture.

10. A simultaneous picture recording and reproducing apparatus as set forth in one of claim 7 to claim 9, **characterized by** comprising a re-synthesizing parameter extracting means for extracting re-synthesizing parameters for efficiently synthesizing and storing information from said synthesized picture information so that said reproducing means reproduces said independent picture information from said synthesized picture information, and then said synthesizing means regenerates said synthesized picture information in accordance with said re-synthesizing parameters.

11. A simultaneous picture recording and reproducing apparatus as set forth in claim 10, **characterized in that** said synthesizing means re-synthesizes information including said new piece of independent picture information.

12. A simultaneous picture recording and reproducing apparatus as set forth in one of claim 7 to claim 11, **characterized in that** said synthesizing means synthesizes said independent picture information with relational information obtained by picturizing information related to said independent picture information in synchronization with each other to generate said synthesized picture information.
